# EUROPÄISCHE PATENTANMELDUNG

(11) **EP 1 733 805 A1**
(43) Veröffentlichungstag der Anmeldung: **20.12.2006**
(21) Anmeldenummer: 06115671.7
(22) Anmeldetag: 19.06.2006
(51) Int. Cl.: B05D 7/14, B05D 5/08

(54) **Produkt mit einer Beschichtung und Verfahren zur Herstellung**

(30) Priorität: 17.06.2005 DE 102005028422
(71) Anmelder: Cofresco Frischhalteprodukte GmbH & Co. KG, 32427 Minden (DE)
(72) Erfinder: ARNING, Hans-Jürgen, 32312, Lübbecke (DE); STENZEL, Rudolf, 32429, Minden (DE)
(74) Vertreter: Dantz, Jan Henning

(57) **Zusammenfassung**

Ein Produkt mit einer Beschichtung, insbesondere für den Küchenbereich, umfasst eine erste dünne Materiallage aus einem Metall, wobei die erste Materiallage zumindest teilweise mit einer dünnen zweiten Materiallage aus einem Silikonmaterial beschichtet ist. Bei einem Verfahren zur Herstellung eines Produktes wird ein flüssige unvernetztes Silikonmaterials auf eine erste Materiallage aus einem Metall aufgebracht und dann anschließend beispielsweise durch Zuführen von Energie auf die beschichtete Materiallage aus Metall das Silikonmaterial vemetzt.

## Beschreibung

Die vorliegende Erfindung betrifft ein Produkt mit einer Beschichtung, insbesondere für den Küchenbereich, mit einer ersten dünnen Materiallage aus einem Metall sowie ein Verfahren zur Herstellung eines solchen Produktes.

Aus der DE 20 2004 001 334 ist ein Silikongummiprodukt bekannt, das ein Silikongummi und eine Glasfaserschicht umfasst, die in dem Silikongummi angeordnet ist. Dabei soll mit dem Silikongummiprodukt ein Ersatz für herkömmliches Backpapier geschaffen werden, das nach dem Gebrauch weggeworfen wird. Das Silikongummiprodukt wird als flache Matte eingesetzt, die eine Unterlage für eine zu backende Auflage bildet. Nachteilig bei diesem Silikongummiprodukt ist die vergleichsweise aufwendige Herstellung mit einer Glasfaserschicht und zudem ist der Anwendungsbereich wegen der flachen Form begrenzt.

Es ist daher Aufgabe der vorliegenden Erfindung ein Produkt mit einer Beschichtung, insbesondere für den Küchenbereich, sowie ein Verfahren zu seiner Herstellung zu schaffen, das besonders vielseitig einsetzbar ist und eine gewisse Elastizität aufweist.

Diese Aufgabe wird mit einem Produkt mit den Merkmalen des Anspruches 1 und einem Verfahren mit den Merkmalen des Anspruches 13 gelöst.

Erfindungsgemäß umfasst das Produkt eine erste dünne Materiallage aus einem Metall, die zumindest teilweise mit einer dünnen zweiten Materiallage aus einem Silikonmaterial beschichtet ist. Als Silikonmaterial bzw. Silikongummi können Materialmischungen eingesetzt werden, die eine hohe Haftfähigkeit bezüglich der verwendeten Metalle besitzen. Dadurch wird eine Materialverbindung geschaffen, die einerseits beständig gegen Hitze und Kälte ist und andererseits auch beständig gegen aggressive Medien ist. Ein entsprechendes Produkt lässt sich insbesondere im Lebensmittelbereich zum Backen und Kochen gut einsetzen, da die zubereiteten Lebensmittel bekannterweise wenig an derartigen Oberflächen anhaften.

Gemäß einer bevorzugten Ausgestaltung der Erfindung ist die Materiallage aus Metall zusammen mit dem flächig beschichteten Silikonmaterial biegbar und kann somit bei Bedarf auch in der Form verändert werden. Dies ist insbesondere dann von Vorteil, wenn das Produkt in der Form noch angepasst werden soll. Die Materiallage aus Metall kann dabei eine Dicke zwischen 20 und 1000µm, vorzugsweise zwischen 50 und 500µm aufweisen und das Silikonmaterial kann mit einer Schichtdicke von 50 bis 2000µm, vorzugsweise von 100 bis 1000µm beschichtet sein.

Gemäß einer weiteren Ausgestaltung ist die Materiallage aus Metall beidseitig mit Silikon beschichtet. Es ist natürlich auch möglich, das Silikon beidseitig mit einer Metallschicht zu beschichten und somit eine Art Sandwichbauweise bereitzustellen. Die Materiallage aus Metall ist bevorzugt aus Aluminiumfolie ausgebildet, da die Schichtdicke von Aluminiumfolie und dem Silikonmaterial gering gehalten werden kann und somit die Herstellungskosten moderat sind, da nur wenig von dem teureren Silikonmaterial benötigt wird.

Das erfindungsgemäße Produkt ist vorzugsweise als Backform oder plattenförmige Backunterlage ausgebildet. Dabei können Griffelemente ausschließlich aus Silikonmaterial vorhanden sein, die aufgrund der hohen Wärmeisolierung des Silikonmaterials gut gegriffen werden können, selbst wenn die Backform bzw. das Backunterlage noch mit heißem Material befüllt ist und die Wände ebenfalls eine hohe Temperatur aufweisen.

Das Silikonmaterial kann transparent ausgebildet sein, was neben einem optisch ansprechenden Erscheinungsbild auch die Möglichkeit gibt, Markierungen innerhalb des Produktes zu erkennen.

Erfindungsgemäß wird auch ein Verfahren zur Herstellung eines flachen Produktes bereitgestellt, bei dem zunächst ein flüssiges Silikonmaterial auf eine erste Materiallage aus einem Metall aufgebracht wird und dann beispielsweise durch Zuführen von Energie auf die beschichtete Materiallage aus Metall das Silikonmaterial vernetzt wird. Dies kann vorzugsweise in einem kontinuierlichen Verfahren, wie Kalandrieren, Sprühbeschichtung oder Extrusionsbeschichtung erfolgen.

Die Erfindung wird nachfolgend anhand mehrerer Ausführungsbeispiele mit Bezug auf die beigefügten Zeichnungen näher erläutert. Es zeigen:
- Figur 1: eine Schnittansicht durch ein Ausführungsbeispiel eines erfindungsgemäßen Produktes;
- Figur 2: eine Draufsicht auf ein als plattenförmige Backunterlage ausgebildetes erfindungsgemäßes Produkt; und
- Figur 3: eine Ansicht eines als Streckgitter ausgebildeten Ausgangsmaterials.

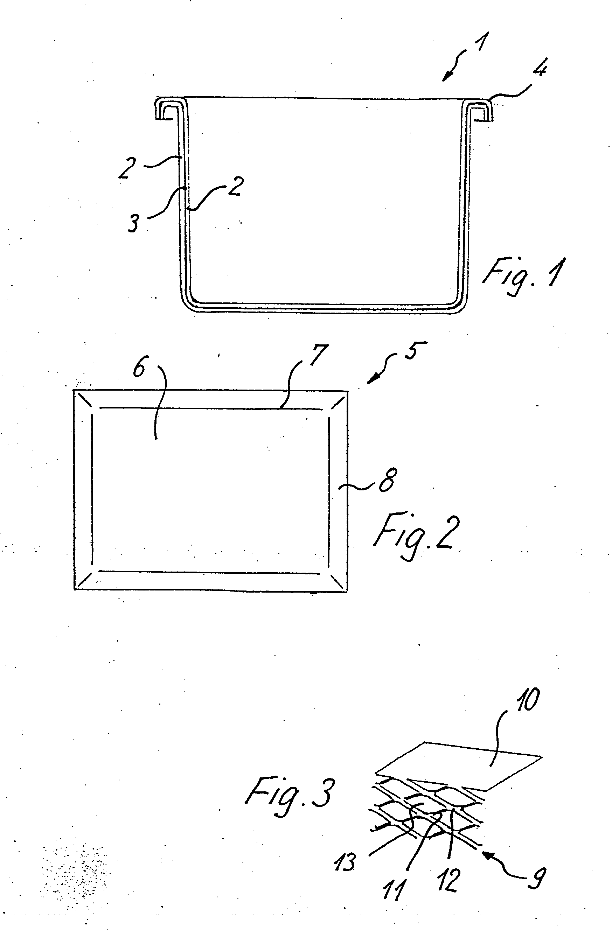

In Figur 1 ist ein als Backform 1 ausgebildetes erfindungsgemäßes Produkt gezeigt, dass im wesentlichen eine Tassenform besitzt und eine mittlere Metallschicht 3, vorzugsweise aus einer Aluminiumfolie, und beidseitig umgebende Silikonschichten 2 aufweist. Dadurch gelangt die mittlere Metallschicht 3 nicht in Kontakt mit einem in der Backform 1 aufgenommenen Material, das nur an der inneren Silikonschicht anliegt. Im oberen Randbereich der Backform ist eine umlaufender Wulst 4 ausgebildet, in dem keine Metallschicht 3 eingefügt ist.

Die gezeigte Backform 1 eignet sich beispielsweise für das Backen in einem Back- oder Mikrowellenofen, beispielsweise für Muffins. Das Silikonmaterial 2 ist zwar ein guter Wärmeisolator, aufgrund der dünnen Beschichtung mit einer Dicke von 50 bis 2000µm, vorzugsweise von 100 bis 1000µm, gelangt die Wärme jedoch ausreichend schnell in die Backform 1. Trotz der hohen Temperaturen kann der Benutzer die Backform 1 jedoch an dem umlaufenden Wulst 4 gut greifen, wobei dort die Metallschicht 3 weggelassen werden kann und dann das Silikonmaterial entsprechend weniger erwärmt ist. Es ist natürlich auch möglich, hervorstehende Griffbügel aus Silikonmaterial vorzusehen, die sich kaum erwärmen und daher gut gegriffen werden können.

Die Backform 1 lässt sich ferner leicht reinigen und wieder verwenden. Das Silikonmaterial ist auch nach häufigem Gebrauch nicht beschädigt.

Zur Herstellung der Backform 1 wird die Materiallage aus Metall in einer Form gepresst, um die Kontur der Backform 1 vorzugeben. Danach wird diese gepresste Form mit Silikonmaterial beschichtet, vorzugsweise in einer Formpresse oder im Spritzgussverfahren. Anschließend erfolgt die thermisch-, chemisch- oder lichtinduzierte Vernetzung des Silikonmaterials. Formgebung, Beschichtung und Vernetzung können alternativ auch in einem einzigen Prozessschritt simultan erfolgen.

Die Metallschicht bei dieser Backform 1 dient der Verstärkung, besitzt ggfs. eine gewisse Flexibilität, ist aber nicht durch die normale Anwendung beim Backen deformierbar.

In Figur 2 ist ein als Backunterlage 5 ausgebildetes Produkt gezeigt, dass aus einer dünnen Metallschicht und zumindest einer Schicht aus einem Silikonmaterial besteht. Die Backunterlage 5 umfasst einen Boden 6, der von einem Rand 8 umgeben ist. Der Rand 8 ist dabei biegbar ausgebildet, so dass der Benutzer selbst entscheiden kann, ob er den Rand 8 nach oben biegt, was bei eher festen Backteilen unnötig ist. Wenn jedoch eher flüssige Stoffe auf der Backunterlage 5 angeordnet sind, macht es Sinn, wenn durch Hochbiegen des Randes 8 ein Auslaufen in den Backofen verhindert werden kann. Hierfür sind auf der Metallschicht Markierungslinien 7 angebracht, die dem Benutzer eine Hilfestellung geben, wo und wie er die Backunterlage 5 biegen soll, um die gewünschte Form zu erhalten. Das Material ist dabei so gestaltet, dass es nach dem Biegen die gewünschte Form behält (plastische Deformation), aber nach dem Gebrauch wieder in die flache Ausgangslage für Reinigungszwecke zurück gebogen werden kann.

Zur Herstellung der Backunterlage kann die Materiallage aus Metall mit Silikonmaterial extrusionsbeschichtet oder durch Kalandrieren beschichtet werden. Im flachen Zustand werden dann die Materiallagen aus Silikon vulkanisiert.

In Figur 3 ist ein als Streckgitter 9 ausgebildetes Ausgangsmaterial für die Herstellung eines erfindungsgemäßen Produktes gezeigt. Ein Streckgitter 9 ist ein Werkstoff mit Öffnungen 13 in der Fläche. Die Öffnungen 13 entstehen durch versetzte Schnitte ohne Materialverlust unter entsprechender Verformung, so dass von einem plattenförmigen Materialabschnitt 10 Stege 11 ausgeformt werden, die an Kreuzungspunkten 12 miteinander verbunden sind. Das so gebildete Streckgitter 9 kann als Ausgangsmaterial dienen, um ein erfindungsgemäßes Produkt durch eine Beschichtung mit Silikonmaterial herzustellen. Dann ist als Metallschicht lediglich ein Metallgitter vorgesehen, dass einen sehr geringen Materialbedarf besitzt und in das Silikonmaterial eingebettet ist. Ein entsprechendes Metallgitter könnte auch durch Weben, Flechten oder Stanzen hergestellt werden. Die Öffnungen in dem Metallgitter können als Rauten, Waben oder andere Löcher ausgebildet sein. Ein solches Produkt könnte wahlweise als Backunterlage oder Backform dienen.

Das Produkt nach Fig. 2 oder 3 besitzt eine verfestigte Form, die stabil genug ist, verformt zu werden und die verformte Position beizubehalten. Später kann das Produkt dann wieder zurück geformt werden. Das Produkt wird somit plastisch und nur vernachlässigbar elastisch verformt und kann daher unterschiedliche Formen einnehmen, ohne dass ein nennenswerter Verschleiß auftritt. Die äußere Silikonschicht kann leicht gereinigt werden, so dass das Produkt häufig wiederverwendet werden kann.

Die erfindungsgemäßen Produkte werden insbesondere im Küchenbereich eingesetzt, vor allem können sämtliche Behältnisse für Haushaltszwecke hergestellt werden. Die Hauptvorteile für entsprechende Produkte sind:
- geringe Haftfähigkeit hinsichtlich des Backgutes
- kaum zu beschädigen
- hitze- und kältebeständig

Aufgrund der Materialeigenschaften des Produktes bietet sich ein Einsatz für Küchenhelfer an, wie :
- Behälter bzw. Unterlagen für Küchenzwecke
- Backformen
- Backplatten
- Backofengeschirr
- Backunterlagen

Bei dem erfindungsgemäßen Herstellungsverfahren wird zunächst ein flüssiges Silikonmaterial auf einer ersten Materiallage aus einem Metall aufgebracht und dann beispielsweise unter Zuführung von Energie das ein- oder beidseitig aufgetragene Silikonmaterial vernetzt (vulkanisiert).

Als Silikonmaterial kann z.B. einfacherweise eine Einkomponenten-Silikonmasse verwendet werden, wie z.B. unter dem Handelsnamen Elastosil® R4001/60MH. Es können auch Zwei- oder Mehrkomponenten-Silikonmassen verwendet werden.

Als Metall kann neben Aluminiumfolie als Ausgangsmaterial auch Edelstahl oder ein anderes Metall eingesetzt werden.

Das Silikonmaterial konnte in einem Versuch in einer elektrisch beheizbaren Presse bei etwa 10bar Druck mit einer 80µm starken Aluminiumfolie verbunden werden, wobei anschließend für eine Vernetzung die beschichtete Aluminiumfolie auf eine Temperatur von 175°C für 5 Minuten gehalten wird.

Für die Herstellung des Produktes können neben einer taktweise arbeitenden Presse auch andere Vorrichtungen, wie ein Kalander oder eine Extrudiervorrichtung eingesetzt werden. Die Materiallage aus Metall kann zusammen mit dem Silikonmaterial extrusionsbeschichtet oder kalandriert werden.

## Patentansprüche

1. Produkt mit einer Beschichtung, insbesondere für den Küchenbereich, mit einer ersten dünnen Materiallage aus einem Metall, **dadurch gekennzeichnet, dass** die erste Materiallage zumindest teilweise mit einer dünnen zweiten Materiallage aus einem Silikonmaterial beschichtet ist.

2. Produkt nach Anspruch 1, **dadurch gekennzeichnet, dass** die Materiallage aus Metall zusammen mit dem flächig beschichteten Silikonmaterial biegbar ist.

3. Produkt nach Anspruch 1 oder 2, **dadurch gekennzeichnet, dass** die erste Materiallage aus Metall eine Dicke zwischen 20 und 1000µm, vorzugsweise zwischen 50 und 500µm besitzt.

4. Produkt nach einem der Ansprüche 1 bis 3, **dadurch gekennzeichnet, dass** das Silikonmaterial in einer Schichtdicke von 50 bis 2000µm, vorzugsweise von 100 bis 1000µm beschichtet ist.

5. Produkt nach einem der Ansprüche 1 bis 4, **dadurch gekennzeichnet, dass** die erste Materiallage aus Metall beidseitig mit Silikon beschichtet ist.

6. Produkt nach einem der Ansprüche 1 bis 5, **dadurch gekennzeichnet, dass** die Materiallage aus Metall als Gitter oder Netz ausgebildet und in das Silikonmaterial eingebettet ist.

7. Produkt nach einem der Ansprüche 1 bis 6, **dadurch gekennzeichnet, dass** das Metall als eine Aluminiumfolie ausgebildet ist.

8. Produkt nach einem der Ansprüche 1 bis 7, **dadurch gekennzeichnet, dass** das Produkt ein Gefäß ist.

9. Produkt nach einem der Ansprüche 1 bis 8, **dadurch gekennzeichnet, dass** das Produkt einen Griffbereich aufweist, in dem eine Materialverdickung des Silikonmaterials vorgesehen ist.

10. Produkt nach einem der Ansprüche 1 bis 9, **dadurch gekennzeichnet, dass** das Produkt als Backform oder Backunterlage ausgebildet ist.

11. Produkt nach einem der Ansprüche 1 bis 10, **dadurch gekennzeichnet, dass** die erste Materiallage aus Metall mit Markierungen bedruckt ist und die Schicht aus Silikonmaterial transparent ausgebildet ist.

12. Verfahren zur Herstellung eines Produktes nach einem der vorhergehenden Ansprüche, mit den folgenden Schritten:
- Aufbringen eines flüssigen Silikonmaterials auf einer erste Materiallage aus einem Metall;
- Zuführen von Energie auf die beschichtete Materiallage aus Metall, um das Silikonmaterial zu vernetzen.

13. Verfahren nach Anspruch 12, **dadurch gekennzeichnet, dass** die beschichtete Materiallage in einem kontinuierlichen Verfahren hergestellt wird.
